(19) Europäisches Patentamt
European Patent Office
Office européen des brevets

(11) **EP 4 428 837 A1**

(12) **EUROPÄISCHE PATENTANMELDUNG**

(43) Veröffentlichungstag:
**11.09.2024 Patentblatt 2024/37**

(21) Anmeldenummer: **24161471.8**

(22) Anmeldetag: **05.03.2024**

(51) Internationale Patentklassifikation (IPC):
**G06V 20/64** (2022.01)    **A47K 13/24** (2006.01)
**G01B 11/24** (2006.01)

(52) Gemeinsame Patentklassifikation (CPC):
**G06V 20/653; A47K 13/24; G01B 11/24**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **10.03.2023 DE 102023106065**

(71) Anmelder: **Hamberger Industriewerke GmbH 83071 Stephanskirchen (DE)**

(72) Erfinder: **HAMBERGER, Peter M. 83071 Stephanskirchen (DE)**

(74) Vertreter: **Winter, Brandl - Partnerschaft mbB Alois-Steinecker-Straße 22 85354 Freising (DE)**

(54) **VERFAHREN ZUM ERMITTELN EINER AUF EINE KERAMIK PASSENDEN AUSTAUSCH-WC-SITZGARNITUR, COMPUTERLESBARES SPEICHERMEDIUM UND COMPUTERGESTÜTZTE VORRICHTUNG**

(57)    Die vorliegende Erfindung betrifft ein Verfahren zum Ermitteln einer auf eine Keramik passenden und aus einem WC-Sitz sowie einem WC-Deckel gebildeten Austausch-WC-Sitzgarnitur. Die Erfindung betrifft ferner computerlesbare Speichermedien, in dem Anweisungen gespeichert sind, die eine computergestützte Vorrichtung veranlassen, das erfindungsgemäße Verfahren auszuführen. Außerdem betrifft die Erfindung eine computergestützte Vorrichtung, die das computerlesbare Speichermedium aufweist und ausgebildet ist, das erfindungsgemäße Verfahren unter Verwendung einer entsprechenden Tiefenbildaufnahmevorrichtung, die in der computergestützten Vorrichtung vorhanden ist oder mit diesem verbindbar ist, auszuführen.

Fig. 5

**Beschreibung**

Technisches Gebiet

Die vorliegende Erfindung betrifft ein Verfahren zum Ermitteln einer auf eine Keramik, insbesondere eine WC-Keramik, passenden Austausch-WC-Sitzgarnitur. Die Erfindung betrifft außerdem ein computerlesbares Speichermedium und eine computergestützte Vorrichtung.

Aus EP 2 175 413 A1 sind ein Verfahren und eine Eirichtung zum Zuordnen einer WC-Sitzgarnitur bekannt. Dabei wird die Geometrie einer Keramik, auf der die WC-Sitzgarnitur passend angebracht werden soll, anhand eines Vergleichsobjekts, wie etwa eines DIN-A4-Blatts oder einer Scheckkarte, ermittelt und mit in einer Datenbank gespeicherten Geometrien von vorhandenen Keramiken verglichen, um eine passende WC-Sitzgarnitur zu bestimmen. Da eine Keramik jedoch keine Ablagefläche bietet ist es bei dem Verfahren erforderlich, eine Ablage, z.B. mittels eines Zollstocks, zu schaffen.

Es ist daher Aufgabe der vorliegenden Erfindung eine verbesserte Technologie zum Ermitteln einer auf eine Keramik passenden Austausch-WC-Sitzgarnitur bereitzustellen. Es soll insbesondere auch einem Laien ermöglicht werden, eine passende Austausch-WC-Sitzgarnitur zu ermitteln.

Diese Aufgabe wird durch das Verfahren, das computerlesbare Speichermedium und die computergestützte Vorrichtung mit den Merkmalen gemäß der unabhängigen Ansprüche gelöst. Vorteilhafte Ausführungsformen sind Gegenstand der abhängigen Ansprüche.

Ein Verfahren zum Ermitteln einer auf eine Keramik passenden und aus einem WC-Sitz sowie einem WC-Deckel gebildeten Austausch-WC-Sitzgarnitur weist die folgenden Schritte auf: Aufnehmen eines WC-Sitz-Bilds, das einen WC-Sitz einer auszutauschenden WC-Sitzgarnitur (d.h. die auszutauschende WC-Sitzgarnitur war bereits passend auf der Keramik montiert) zeigt; Eingeben des WC-Sitz-Bilds in ein KI (Künstliche Intelligenz)-Modell, das mit Trainingsbildern von WC-Sitzen von unterschiedlichen Austausch-WC-Sitzgarnituren trainiert ist, wobei sich die WC-Sitze der Austausch-WC-Sitzgarnituren in mindestens einem Passgenauigkeitsmerkmal, das eine Passgenauigkeit in Bezug auf die Keramik festlegt, unterscheiden; Ausgeben eines Typs der Austauch-WC-Sitzgarnitur, die dem in dem WC-Sitz-Bild gezeigten WC-Sitz entspricht und die Passgenauigkeit auf der Keramik erreicht. Demzufolge ist es bei dem erfindungsgemäßen Verfahren lediglich erforderlich, ein Bild eines WC-Sitzes aufzunehmen. Das KI-Modell ist mit den Trainingsbildern von WC-Sitzen von unterschiedlichen WC-Sitzgarnituren trainiert und die WC-Sitze unterscheiden sich hinsichtlich mindestens eines Passgenauigkeitsmerkmals, das für eine Passgenauigkeit auf die Keramik von Bedeutung ist. Demzufolge ermöglicht das erfindungsgemäße Verfahren eine einfache Ermittlung der passenden WC-Sitzgarnitur.

Gemäß einem Aspekt der vorliegenden Erfindung kann das WC-Sitz-Bild eine Unterseite des WC-Sitzes zeigen. Die Unterseite des WC-Sitzes ist dabei eine Fläche, die in einem geschlossenen Zustand des WC-Sitzes bzw. der WC-Sitzgarnitur zu einer Auflagefläche der Keramik gerichtet ist, d.h. der Auflagefläche gegenüberliegt. Von der Unterseite des WC-Sitzes her sind die Passgenauigkeitsmerkmale gut einsehbar, so dass eine Genauigkeit bei der Ermittlung der passenden WC-Sitzgarnitur sichergestellt ist.

Gemäß einem Aspekt der Erfindung können die Trainingsbilder mittels einer Bildaufnahmevorrichtung aufgenommen sein. Auf diese Weise kann durch das KI-Modell eine hohe Genauigkeit bei der Ermittlung der passenden WC-Sitzgarnitur erreicht werden.

Zusätzlich oder alternativ zu dem vorherigen Aspekt können die Trainingsbilder aus dreidimensionalen Modellen der Austausch-WC-Sitzgarnituren erstellt sein. Demzufolge können unterschiedliche Ausrichtungen in Bezug auf die WC-Sitze sowie unterschiedliche Hintergrund- und Belichtungsbedingungen bei der Erstellung der Trainingsbilder auf einfache Weise berücksichtigt werden. Eine Genauigkeit kann zudem durch Einbeziehen der durch die Bildaufnahmevorrichtung aufgenommenen Bilder gesteigert werden.

Gemäß einem Aspekt der Erfindung kann das Passgenauigkeitsmerkmal mindestens ein Element aus der Gruppe sein, die aus Form, Oberflächenbeschaffenheit, insbesondere Farbe und Struktur, Pufferform, Pufferposition, Wölbung, Gelenk, Keramikbefestigung, Dämpfer und/oder Abstand zwischen Keramikbefestigungen gebildet ist. Durch Berücksichtigung dieser Merkmale wird eine gute Passgenauigkeit der Austausch-WC-Sitzgarnitur auf der Keramik, auf der zuvor der in dem WC-Sitz-Bild gezeigte WC-Sitz montiert war, sichergestellt.

Gemäß einem Aspekt der Erfindung kann das KI-Modell ein neuronales Netzwerk sein. Neuronale Netzwerke stellen bei der Bilderkennung eine hohe Genauigkeit bereit, so dass eine gute Passgenauigkeit der Austausch-WC-Sitzgarnitur auf der Keramik sichergestellt ist. Das neuronale Netzwerk kann bevorzugt für eine Verwendung in einem tragbaren Endgerät, z.B. durch das Vorsehen einer geringeren Anzahl von Schichten und/oder Neuronen, optimiert sein. Demzufolge kann ein Nutzer das Verfahren auf einfache und komfortable Weise mit dem tragbaren Endgerät ausführen.

Gemäß einem Aspekt der Erfindung kann das Ausgeben der WC-Sitzgarnitur ein Ausgeben von mehreren Typen von Austausch-WC-Sitzgarnituren und einer dazugehörigen Wahrscheinlichkeit der Entsprechung mit dem in dem WC-Sitz-Bild gezeigten WC-Sitz umfassen. Es kann der Fall eintreten, dass mehrere Austausch-WC-Sitzgarnituren von einem Hersteller oder Händler für die Keramik geeignet sind. Demzufolge werden einem Nutzer des Verfahrens auch mehrere Auswahlmöglichkeiten sowie eine dazugehörige Wahrscheinlichkeit einer Entsprechung bereitgestellt und der Nutzer kann dann selbständig aus den bereitgestellten Typen wählen.

Ein KI (Künstliche Intelligenz)-Modell, insbesondere ein neuronales Netzwerk, ist mit Trainingsbildern von WC-Sitzen von unterschiedlichen Austausch-WC-Sitzgarnituren trainiert. Die WC-Sitze der Austausch-WC-Sitzgarnituren unterscheiden sich in mindestens einem Passgenauigkeitsmerkmal, das eine Passgenauigkeit in Bezug auf die Keramik festlegt. Durch die Verwendung des KI-Modells, das insbesondere als neuronales Netzwerk ausgebildet ist, kann somit eine ermittelte Austausch-WC-Sitzgarnitur eine hohe Passgenauigkeit auf der Keramik erreichen. Die Anmelderin behält sich zudem das Recht vor, einen oder mehrere unabhängige Ansprüche auf ein Trainingsverfahren für das KI-Modell unter Verwendung der oben beschriebenen Trainingsbilder einzureichen.

In einem computerlesbaren Speichermedium sind Anweisungen, die eine computergestützte Vorrichtung veranlassen, das Verfahren gemäß einem der obigen Aspekte auszuführen, und das KI-Modell gemäß dem vorherigen Aspekt gespeichert. Demzufolge kann eine computergestützte Vorrichtung das erfindungsgemäße Verfahren auf einfache Weise implementieren.

Eine computergestützte Vorrichtung weist das computerlesbare Speichermedium gemäß dem vorherigen Aspekt und mindestens einen Prozessor zum Ausführen der in dem computerlesbaren Speichermedium gespeicherten Anweisungen auf. Die computergestützte Vorrichtung weist zusätzlich eine Bildaufnahmevorrichtung auf oder ist mit dieser verbindbar. Demzufolge ermöglicht die computergestützte Vorrichtung das Ausführen des erfindungsgemäßen Verfahrens. Bei der computergestützten Vorrichtung handelt es sich bevorzugt um ein mobiles Endgerät, wie etwa ein Smartphone oder ein Tablet, in das eine Bildaufnahmevorrichtung, wie etwa eine Kamera, integriert ist. Demzufolge kann ein Nutzer die Austausch-WC-Sitzgarnitur auf komfortable Weise ermitteln.

Ein weiteres Verfahren zum Ermitteln einer auf eine Keramik passenden und aus einem WC-Sitz sowie einem WC-Deckel gebildeten Austausch-WC-Sitzgarnitur weist die folgenden Schritte auf: Aufnehmen eines Tiefenbilds von der Keramik, auf die die Austausch-WC-Sitzgarnitur passend anzubringen ist; Erfassen einer Keramikgeometrie aus dem Tiefenbild; Vergleichen der erfassten Keramikgeometrie mit, insbesondere in einer Datenbank, gespeicherten Keramikgeometrien von unterschiedlichen Austausch-WC-Sitzgarnituren; Ausgeben eines Typs der Austauch-WC-Sitzgarnitur, die der Keramikgeometrie entspricht und die Passgenauigkeit auf der Keramik erreicht. Folglich ist es bei diesem Verfahren nicht erforderlich, ein Vergleichsobjekt in der Nähe der Keramik anzuordnen. Das Tiefenbild weist zusätzlich zu einer Farbinformation eines Pixels auch eine Tiefeninformation auf, die für den Pixel oder einen Bereich in dem Tiefenbild eine Distanz zwischen dem aufgenommenen Objekt und einer Tiefenbildaufnahmevorrichtung angibt. Anschließend wird die Keramikgeometrie aus dem Tiefenbild erfasst und mit gespeicherten und vorhergehend erfassten Keramikgeometrien von unterschiedlichen Austausch-WC-Sitzgarnituren verglichen. Die Keramikgeometrien der unterschiedlichen Austausch-WC-Sitzgarnituren können dabei lokal gespeichert oder über eine Netzwerkverbindung, wie etwa das Internet, abrufbar sein. Die Keramikgeometrien sind dabei bevorzugt in Form einer Datenbank gespeichert. Folglich ist für die Ermittlung der Austausch-WC-Sitzgarnitur nur die Erfassung der Keramikgeometrie erforderlich, so dass das Verfahren auch in Fällen angewendet werden kann, in denen die vorherige WC-Sitzgarnitur nicht auf die Keramik passt oder überhaupt keine WC-Sitzgarnitur, z.B. bei einem Einzug in eine Wohnung, vorhanden ist.

Gemäß einem Aspekt der vorliegenden Erfindung kann das Tiefenbild eine Auflagefläche der Keramik zeigen. Auf diese Weise kann die Keramikgeometrie und somit auch die Austausch-WC-Sitzgarnitur angemessen ermittelt werden.

Gemäß einem Aspekt der vorliegenden Erfindung kann die Keramikgeometrie mindestens eine Breite der Keramik, eine Länge von einem hinteren Rand des Beckens, insbesondere einem hinteren Rand einer Öffnung des Beckens, zu einem vorderen Rand der Keramik und einen Abstand zwischen Mittelpunkten von Befestigungsstellen, insbesondere von Befestigungslöchern, umfassen. Durch Erfassen dieser Parameter der Keramikgeometrie kann eine gut passende Austausch-WC-Sitzgarnitur ermittelt werden. Bevorzugt kann die Keramikgeometrie zusätzlich eine Breite des Beckens, insbesondere eine Breite der Öffnung des Beckens, und eine Länge des Beckens, insbesondere eine Länge der Öffnung des Beckens, umfassen. Auf diese Weise ist eine noch genauere Ermittlung der Austausch-WC-Sitzgarnitur möglich, da auch die Randbreiten der Keramik berücksichtigt werden können. Es ist anzumerken, dass die vorherigen Parameter im Bereich einer Auflagefläche der Keramik, auf der ein WC-Sitz der WC-Sitzgarnitur aufliegt, erfasst werden.

Gemäß einem Aspekt der vorliegenden Erfindung kann das Erfassen der Keramikgeometrie ein Erkennen von Kanten der Auflagefläche in dem Tiefenbild umfassen. Wie bereits erwähnt, gibt die Tiefeninformation für einen Pixel oder einen Bereich in dem Tiefenbild einen Abstand von dem aufgenommenen Objekt und der Tiefenbildaufnahmevorrichtung an. Unter Berücksichtigung dieser Information kann dann eine Kante der Auflagefläche zuverlässig erkannt und die Keramikgeometrie genau erfasst werden. Auf diese Weise ist wiederum eine passende Austausch-WC-Sitzgarnitur ermittelbar.

Gemäß einem Aspekt der Erfindung kann das Erfassen der Keramikgeometrie das Festlegen von Messpunktpaaren, zwischen denen ein Abstand zu bestimmen ist, an vorgegebenen Stellen an den erkannten Kanten umfassen. Durch das Festlegen der Messpunkt an vorgegebenen Stellen, kann die Keramikgeometrie genau bestimmt werden. Insbesondere wird hierzu eine gespeicherte Vorlage verwendet, um die Messpunkte auf den Kanten an den korrekten Stellen festzulegen. Die Messpunkte können somit auch automatisch festgelegt werden. Somit kann die passende Austausch-WC-Sitzgarnitur korrekt ermittelt werden.

Gemäß einem Aspekt der Erfindung kann das Aufnehmen des Tiefenbilds ein kontinuierliches Aufnehmen von einer Mehrzahl von Tiefenbildern aus unterschiedlichen Winkeln und Abständen zu der Keramik umfassen. Folglich kann das Erfassen der Keramikgeometrie anhand der Mehrzahl von Tiefenbildern erfolgen. Das kontinuierliche Aufnehmen der Mehrzahl von Tiefenbildern entspricht somit einem Abtasten oder einem Scannen der Keramik. Somit können relevante Bereiche der Keramik, z.B. ein Bereich der Befestigungsstellen, genauer aufgenommen und die Keramikgeometrie noch exakter erfasst werden.

Gemäß einem Aspekt der Erfindung kann das Erfassen der Keramikgeometrie ein Bestimmen von auf der Auflagefläche angeordneten Auflageflächenpunkten in der Mehrzahl von Tiefenbildern umfassen. Die Keramikgeometrie kann anschließend im Schritt zum Erfassen der Keramikgeometrie anhand der Auflageflächenpunkte erfasst werden. Demzufolge kann die Keramikgeometrie genau erfasst werden, so dass auch eine gut passende Austausch-WC-Sitzgarnitur ermittelbar ist.

Gemäß einem Aspekt der Erfindung können die Auflageflächenpunkte ausgehend von einem Mittelpunkt von einer in der Mehrzahl von Tiefenbildern vorhandenen dreidimensionalen Punktewolke bestimmt werden. Die Punktewolke wird dabei durch die in der Mehrzahl von Tiefenbildern enthaltenen Tiefeninformation der einzelnen Pixel bzw. Bereiche erhalten. Ein Bezugssystem, wie etwa ein dreidimensionales Koordinatensystem, in dem abgescannten bzw. abgetasteten Raum kann anhand eines Startpunkts der Aufnahme der Mehrzahl von Tiefenbildern festgelegt sein. Durch die Verwendung des Mittelpunkts wird sichergestellt, dass eine lineare Regression zum Ermitteln einer Ebene, in der die Auflageflächenpunkte vorhanden sind, korrekt durchführbar ist.

Gemäß einem Aspekt der Erfindung können die Auflageflächenpunkte unter Verwendung einer Ebene, die durch die nachfolgende Formel definiert ist, bestimmt werden. Durch die Verwendung der Formel wird sichergestellt, dass während des kontinuierlichen Aufnehmens eine Abhängigkeit zwischen den Ebenen, in denen die Auflageflächenpunkte vorhanden sind, in der Mehrzahl von Tiefenbildern beibehalten wird, während eine Laufzeit lediglich linear mit zunehmenden Aufnahmen ansteigt.

$$P_{(\mathbb{C}_n)} = \lambda \begin{pmatrix} \cos(\alpha_{(\overrightarrow{v},\mathbb{C}_n)}) \\ 0 \\ \sin(\alpha_{(\overrightarrow{v},\mathbb{C}_n)}) \end{pmatrix} + \mu \begin{pmatrix} 0 \\ \cos(\beta_{(\overrightarrow{v},\mathbb{C}_n)}) \\ \sin(\beta_{(\overrightarrow{v},\mathbb{C}_n)}) \end{pmatrix} + m_{(\mathbb{C}_n)} : \lambda, \mu \in \mathbb{R}_0$$

Gemäß einem Aspekt der Erfindung kann das Erfassen der Keramikgeometrie das Festlegen von Messpunktpaaren, zwischen denen ein Abstand zu bestimmen ist, an vorgegebenen Stellen der bestimmten Auflageflächenpunkte umfassen. Die Messpunkte können dabei automatisch an relevanten Stellen in den Auflageflächenpunkten angeordnet werden, wodurch eine genaue Erfassung der Keramikgeometrie ermöglicht ist.

Gemäß einem Aspekt der vorliegenden Erfindung können die Messpunktpaare durch Eingabe mittels einer Benutzerschnittstelle, insbesondere mittels eines berührungsempfindlichen Bildschirms, festgelegt werden. Demzufolge sind die Messpunktpaare in dem Tiefenbild auf einfache Weise festlegbar.

Gemäß einem Aspekt der Erfindung kann das Ausgeben der WC-Sitzgarnitur ein Ausgeben von mehreren Typen von Austausch-WC-Sitzgarnituren und einer dazugehörigen Wahrscheinlichkeit der Entsprechung mit der Keramik umfassen. Es kann der Fall eintreten, dass mehrere Austausch-WC-Sitzgarnituren von einem Hersteller oder Händler für die Keramik geeignet sind. Demzufolge werden einem Nutzer des Verfahrens auch mehrere Auswahlmöglichkeiten sowie eine dazugehörige Wahrscheinlichkeit einer Entsprechung bereitgestellt und der Nutzer kann dann selbständig aus den bereitgestellten Typen wählen.

Gemäß einem Aspekt der Erfindung kann das Verfahren nach dem Ausgeben eines Typs der Austauch-WC-Sitzgarnitur, zusätzlich einen Schritt zum Überlagern eines dreidimensionalen Modells der ermittelten Austausch-WC-Sitzgarnitur in dem Tiefenbild aufweisen. Demzufolge kann ein Nutzer des Verfahrens eine Passgenauigkeit der ermittelten und ggf. ausgewählten Austausch-WC-Sitzgarnitur auf der Keramik optisch überprüfen.

In einem computerlesbaren Speichermedium sind Anweisungen, die eine computergestützte Vorrichtung veranlassen, das erfindungsgemäße Verfahren gemäß einem der vorhergehenden Aspekte auszuführen, gespeichert. Demzufolge kann eine computergestützte Vorrichtung das erfindungsgemäße Verfahren auf einfache Weise implementieren.

Eine computergestützte Vorrichtung weist das computerlesbare Speichermedium gemäß dem vorherigen Aspekt und mindestens einen Prozessor zum Ausführen der in dem computerlesbaren Speichermedium gespeicherten Anweisungen auf. Ferner weist die computergestützte Vorrichtung eine Tiefenbildaufnahmevorrichtung auf oder ist mit dieser verbindbar. Demzufolge ermöglicht die computergestützte Vorrichtung das Ausführen des erfindungsgemäßen Verfahrens. Bei der computergestützten Vorrichtung handelt es sich bevorzugt um ein mobiles Endgerät, wie etwa ein Smartphone oder ein Tablet, in das bereits eine Tiefenbildaufnahmevorrichtung, wie etwa ein Lidar-Sensor, ein TOF-Sensor oder eine Stereo-Kamera, integriert ist. Das Tiefenbild kann auch durch Aufnahmen aus unterschiedlich Bildwinkeln unter Berücksichtigung einer Bewegung des tragbaren Endgeräts in Bezug auf das aufzunehmende Objekt erfolgen. Die Bewegung des tragbaren Endgeräts kann dabei mittels eines Gyrosensors erfasst werden. Demzufolge kann ein Nutzer die Austausch-WC-Sitzgarnitur auf komfortable Weise ermitteln.

Kurzbeschreibung der Figuren

Nachfolgend werden Ausführungsformen der vorliegenden Erfindung unter Bezugnahme auf die Figuren beschrieben. Es zeigen:

Fig. 1 eine erfindungsgemäße computergestützte Vorrichtung gemäß einer ersten Ausführungsform;

Fig. 2 ein WC-Sitz-Bild, das zum Ermitteln einer Austausch-WC-Sitzgarnitur verwendet wird;

Fig. 3 eine erfindungsgemäße computergestützte Vorrichtung gemäß einer zweiten Ausführungsform;

Fig. 4 eine Erfassung einer Keramikgeometrie gemäß der zweiten Ausführungsform;

Fig. 5 eine Erfassung der Keramikgeometrie gemäß einer dritten Ausführungsform; und

Fig. 6 eine Erfassung der Keramikgeometrie gemäß einer vierten Ausführungsform.

Beschreibung der Ausführungsformen

Erste Ausführungsform

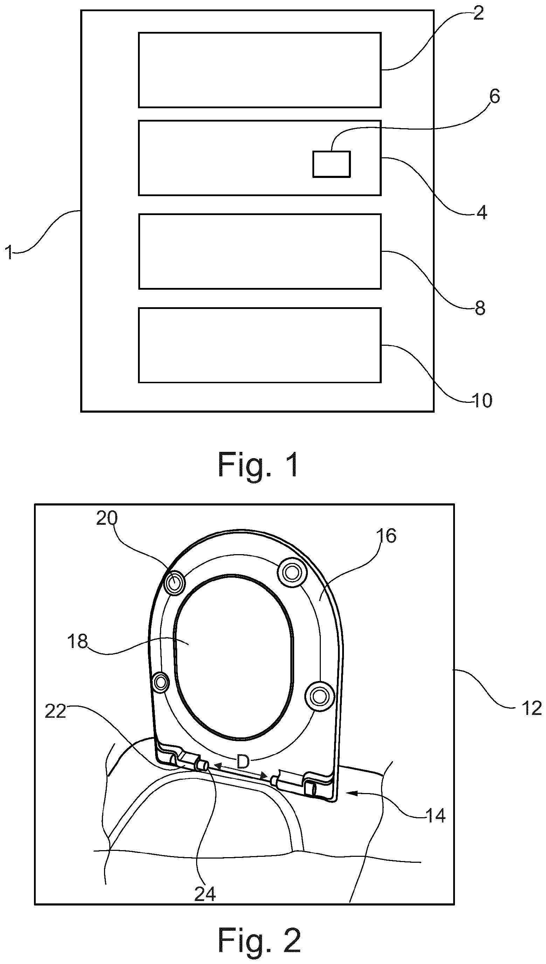

Fig. 1 zeigt eine computergestützte Vorrichtung 1 (nachfolgend vereinfachend als Vorrichtung 1 bezeichnet) gemäß einer ersten Ausführungsform der vorliegenden Erfindung, die einen Prozessor 2, ein computerlesbares Speichermedium 4 (nachfolgend vereinfachend als Speicher 4 bezeichnet), in dem ein neuronales Netzwerk 6 und Anweisungen zum Ausführen eines Verfahrens gemäß der ersten Ausführungsform gespeichert sind, eine Bildaufnahmevorrichtung 8 und eine Ein-/Ausgabeeinheit 10 aufweist. Die in dem Speicher 4 gespeicherten Anweisungen werden in Form eines Programmcodes verkörpert, der durch den Prozessor 2 ausführbar ist. Die Vorrichtung 1 ist gemäß der Ausführungsform als tragbares Endgerät, wie etwa ein Smartphone oder ein Tablet, ausgebildet und die Komponenten 2 bis 10 sind allesamt in der Vorrichtung 1 vorhanden. Die Ein-/Ausgabeeinheit 10 ist dabei bevorzugt als ein berührungsempfindlicher Bildschirm ausgebildet, über den eine Eingabe eines Nutzers der Vorrichtung 1 empfangen werden kann und dem Nutzer eine Information optisch angezeigt werden kann.

Gemäß der ersten Ausführungsform wird eine Austausch-WC-Sitzgarnitur unter Verwendung des neuronalen Netzwerks 6 ermittelt. Dazu wird zunächst durch die Bildaufnahmevorrichtung 8, die einer Kamera entspricht, ein in Fig. 2 dargestelltes WC-Sitz-Bild 12, das eine WC-Sitzgarnitur 14 zeigt, die aus einem WC-Sitz 16 und einem WC-Deckel 18 gebildet ist, aufgenommen. Das WC-Sitz-Bild 12 entspricht dabei z.B. einem Bild, das aus Pixeln mit einer Farbinformation, wie etwa eine RGB-Information, gebildet ist. Der WC-Sitz 16 bzw. die WC-Sitzgarnitur 14 umfassen Passgenauigkeitsmerkmale, die für eine Passgenauigkeit auf eine Keramik von Bedeutung sind. Der WC-Sitz 16 aus Fig. 2 weist z.B. vier Puffer 20 mit runder Form, ein Gelenk 22, Befestigungen 24, einen Abstand D zwischen den Befestigungen 24 und eine D-Form auf. Die Passgenauigkeitsmerkmale sind dabei nicht auf diese Merkmale beschränkt und können die folgenden Merkmale umfassen: Form, Oberflächenbeschaffenheit, insbesondere Farbe und Struktur, Pufferform, Pufferposition, Wölbung, Gelenk, Keramikbefestigung, Abstand zwischen Keramikbefestigungen und/oder Dämpfer.

Um zwischen den einzelnen Typen von Austausch-WC-Sitzgarnituren unterscheiden zu können, wurde das neuronale Netzwerk 6 mit Trainingsbildern von WC-Sitzen von unterschiedlichen Austausch-WC-Sitzgarnituren trainiert. Die WC-Sitze der Austausch-WC-Sitzgarnituren unterscheiden sich in mindestens einem Passgenauigkeitsmerkmal. Das neuronale Netzwerk 6 kann auf diese Weise einen Typ einer passenden Austausch-WC-Sitzgarnitur ermitteln und ausgeben. Die Vorrichtung 1 kann diesen Typ über die Ein-/Ausgabeeinheit 10 an den Nutzer der Vorrichtung 1 bereitstellen.

Es kann bei der Ermittlung der Austausch-WC-Sitzgarnitur aufgrund der hohen Produktvielfalt für WC-Sitzgarnituren der Fall auftreten, dass mehrere Austausch-WC-Sitzgarnituren auf die Keramik passen. In diesem Fall kann das neuronale Netzwerk 6 auch derart ausgebildet sein, dass es mehrere Typen von Austausch-WC-Sitzgarnituren und eine dazugehörige Wahrscheinlichkeit der Entsprechung mit dem in dem WC-Sitz-Bild gezeigten WC-Sitz ausgibt. In diesem Fall kann der Nutzer der Vorrichtung 1 dann eine abschließende Entscheidung treffen und auch hinsichtlich einer unterschiedlichen Ausstattung der Austausch-WC-Sitzgarnitur, z.B. Soft-Close oder nicht, wählen.

Die Trainingsbilder zum Trainieren des neuronalen Netzwerks 6 können dabei mittels einer Bildaufnahmevorrichtung aufgenommen sein. Auf diese Weise wird eine hohe Genauigkeit bei der Ermittlung der Austausch-WC-Sitzgarnitur unter ähnlichen Aufnahmebedingungen, d.h. Beleuchtung und Hintergrund, und einer ähnlichen Ausrichtung der Kamera zu dem aufgenommen WC-Sitz 14 erreicht. Alternativ oder zusätzlich können die Trainingsbilder aus dreidimensionalen Modellen (z.B. CAD-Modelle) der Austausch-WC-Sitzgarnituren erstellt sein. Die aus den dreidimensionalen Modellen erstellten Trainingsbilder können dabei auf einfache Weise hinsichtlich der Aufnahmebedingungen und der Ausrichtung variiert werden, so dass eine Genauigkeit bei der Ermittlung der Austausch-WC-Sitzgarnitur erhöht wird.

Die Vorrichtung 1 und das Verfahren gemäß der ersten Ausführungsform der Erfindung ermöglichen es folglich einem Nutzer, eine Austausch-WC-Sitzgarnitur auf einfache Weise und mit einer hohen Passgenauigkeit zu ermitteln. Demzufolge kann auch eine hohe Rückgabequote auf Seiten eines Händlers oder Herstellers verringert werden.

Zweite Ausführungsform

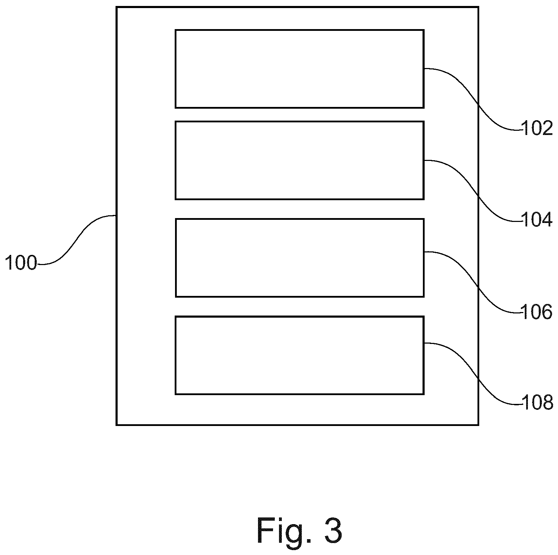

Fig. 3 zeigt eine computergestützte Vorrichtung 100 (nachfolgend vereinfachend als Vorrichtung 100 bezeichnet) gemäß einer zweiten Ausführungsform der vorliegenden Erfindung, die einen Prozessor 102, ein computerlesbares Speichermedium 104 (nachfolgend vereinfachend als Speicher 104 bezeichnet), in den Anweisungen zum Ausführen eines Verfahrens gemäß der zweiten Ausführungsform gespeichert sind, eine Tiefenbildaufnahmevorrichtung 106 und eine Ein-/Ausgabeeinheit 108 aufweist. Die in dem Speicher 104 gespeicherten Anweisungen werden in Form eines Programmcodes verkörpert, der durch den Prozessor 102 ausführbar ist. Die Vorrichtung 100 ist gemäß der Ausführungsform als tragbares Endgerät, wie etwa ein Smartphone oder Tablet, ausgebildet und die Komponenten 102 bis 108 sind allesamt in der Vorrichtung 100 vorhanden. Die Ein-/Ausgabeeinheit 108 ist dabei als ein berührungsempfindlicher Bildschirm ausgebildet, über den eine Eingabe eines Nutzers der Vorrichtung 100 empfangen werden kann und dem Nutzer eine Information optisch angezeigt werden kann.

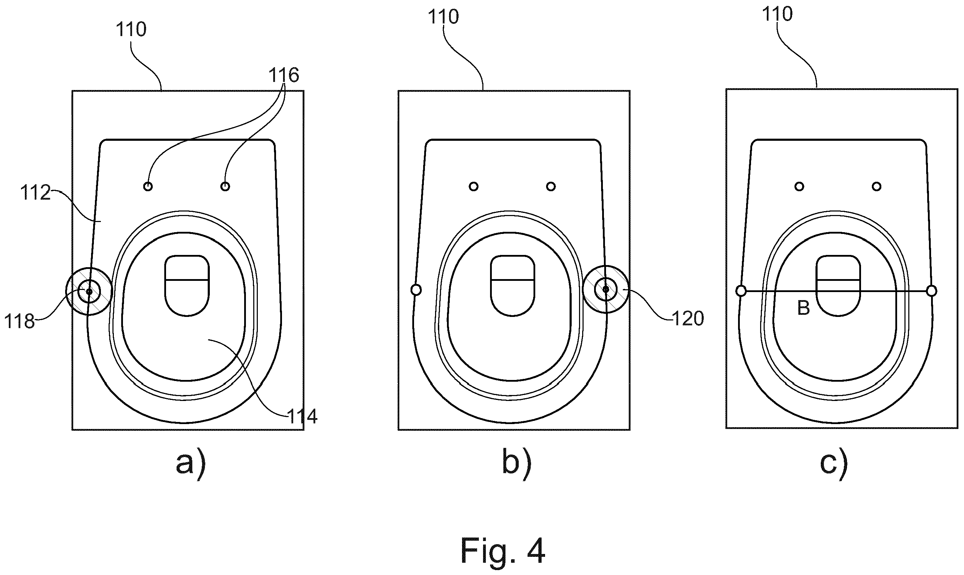

Fig. 4 zeigt ein durch die Tiefenbildaufnahmevorrichtung 108 aufgenommenes Tiefenbild 110, das eine Auflagefläche einer Keramik 112 zeigt. Die in dem Tiefenbild 110 gezeigte Keramik 112 umfasst ein Becken 114 und Befestigungslöcher 116. Alternativ kann die Keramik 112 auch andere Befestigungsmöglichkeiten, z.B. einen Pin, aufweisen. Um nun die Keramikgeometrie in dem Tiefenbild 110 zu erfassen, kann ein Nutzer zunächst einen Messpunkt 118 (siehe Fig. 4a)) und dann einen Messpunkt 120 (siehe Fig. 4b)) in dem Tiefenbild 110 durch Betätigung der Ein-/Ausgabeeinheit 108 festlegen. Die Vorrichtung 100 ist dann aufgrund einer in dem Tiefenbild vorhandenen Tiefeninformation imstande, einen Abstand B zwischen den Messpunkten zu erfassen (siehe Fig. 4c)). Die Keramikgeometrie umfasst dabei folgende Parameter der Keramik 112, die in gleicher Weise bestimmbar sind: Breite der Keramik 112, eine Länge von einem hinteren Rand des Beckens 114 zu einem vorderen Rand der Keramik 112 und einen Abstand zwischen Mittelpunkten von Befestigungsstellen, d.h. der Befestigungslöcher 116. Um bevorzugt auch einen Rand der Keramik 112 zu dem Becken 114 bei der Ermittlung der Austausch-WC-Sitzgarnitur berücksichtigen können, kann die Keramikgeometrie zusätzlich eine Breite des Beckens 114 und eine Länge des Beckens 114 umfassen.

Anschließend wird die erfasste Keramikgeometrie mit vorhergehend gespeicherten Keramikgeometrien von unterschiedlichen Austausch-WC-Sitzgarnituren verglichen, um eine auf die Keramik 112 passende Austausch-WC-Sitzgarnitur zu ermitteln. Die Keramikgeometrien der Austausch-WC-Sitzgarnituren können dabei in dem Speicher 104 der Vorrichtung 100 gespeichert sein. Alternativ kann die erfasste Keramikgeometrie durch die Vorrichtung 100 über ein Netzwerk, z.B. das Internet, an einen Server gesendet werden. Anschließend kann ein ermittelter Typ einer passenden Austausch-WC-Sitzgarnitur ausgegeben und durch Anzeigen auf der Ein-/Ausgabeeinheit 108 bereitgestellt werden.

Hierbei kann der Fall eintreten, dass mehrere Austausch-WC-Sitzgarnituren für eine Keramik passen. Demzufolge können mehreren Typen von Austausch-WC-Sitzgarnituren und eine dazugehörige Wahrscheinlichkeit der Entsprechung mit der Keramik ausgegeben werden. Der Nutzer der Vorrichtung 110 kann dann aus den mehreren Typen eine bevorzugte Austausch-WC-Sitzgarnitur wählen.

Besonders bevorzugt kann nach dem Ausgeben eines Typs der Austauch-WC-Sitzgarnitur oder dem Auswählen der Austausch-WC-Sitzgarnitur aus den mehreren bestimmten Typen ein dreidimensionales Modell der ermittelten oder ausgewählten Austausch-WC-Sitzgarnitur in dem Tiefenbild überlagert 110 werden. Die Überlagerung kann auch anhand einer transparenten oder semi-transparenten Darstellung erfolgen. Demzufolge kann der Nutzer eine Passgenauigkeit überprüfen.

Durch die Vorrichtung 100 und das Verfahren gemäß der zweiten Ausführungsform ist eine einfache Erfassung der Keramikgeometrie möglich. Demzufolge wird eine gute Passgenauigkeit der Austausch-WC-Sitzgarnitur erreicht.

Dritte Ausführungsform

Eine computergestützte Vorrichtung gemäß der dritten Ausführungsform entspricht mit Ausnahme der in dem Speicher 104 gespeicherten Anweisungen der computergestützten Vorrichtung 100 gemäß der zweiten Ausführungsform. Anstelle der Anweisungen zum Ausführen des Verfahrens gemäß der zweiten Ausführungsform sind in dem Speicher 104 Anweisungen zum Ausführen eines Verfahrens gemäß der dritten Ausführungsform gespeichert.

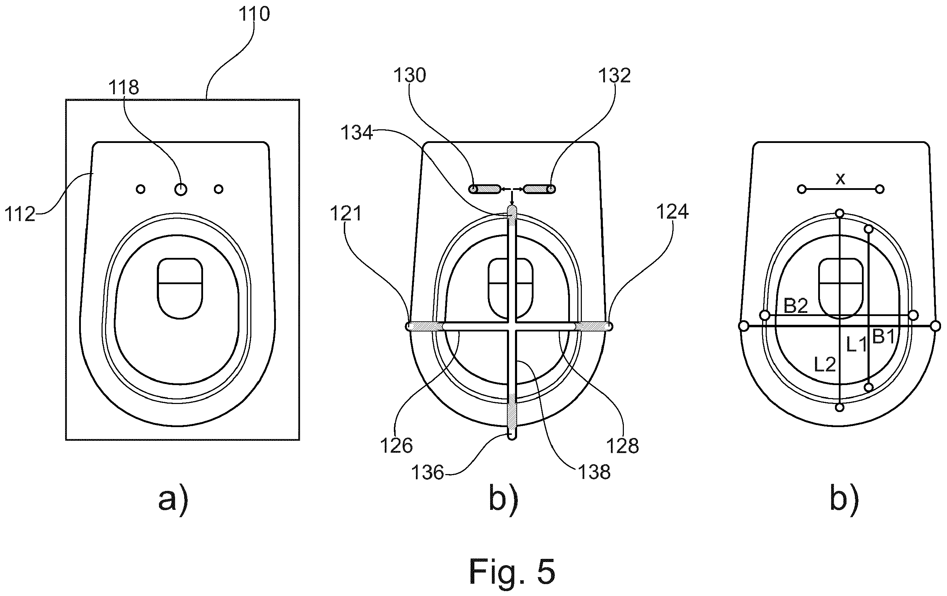

Das Verfahren gemäß der dritten Ausführungsform unterscheidet sich vom Verfahren gemäß der zweiten Ausführungsform durch die Erfassung der Keramikgeometrie. In der dritten Ausführungsform werden beim Erfassen der Keramikgeometrie die Kanten der Auflagefläche der Keramik 112 anhand der Tiefeninformation in dem Tiefenbild erkannt. Hierfür sollte, wie in Fig. 5a) gezeigt, bevorzugt auf einen Punkt zwischen den Befestigungslöchern 116 fokussiert werden. Die Messpunkte 122 bis 138 zum Ermitteln der einzelnen Parameter der Keramikgeometrie können dann automatisch an vorgegeben Stellen der Kanten, wie in Fig. 5b) gezeigt, festgelegt werden. Anschließend können die einzelnen Parameter X, $B_1$, $B_2$, $L_1$, $L_2$, wie in Fig. 5c) dargestellt, zuverlässig und genau bestimmt werden. Es ist anzumerken, dass in Fig. 5c) alle Parameter der Keramikgeometrie gezeigt sind. Selbstverständlich ist es auch in der dritten Ausführungsform ausreichend, die in der zweiten Ausführungsform angegebenen Parameter zu bestimmen.

Demzufolge ermöglicht die dritte Ausführungsform aufgrund der Kantenerkennung der Auflagefläche der Keramik 112 die automatische Erfassung der Keramikgeometrie anhand des Tiefenbilds. Demzufolge ist ein Fehler, der bei einer manuellen Festlegung der Messpunkte erfolgen kann, vermeidbar.

Vierte Ausführungsform

Eine computergestützte Vorrichtung gemäß der vierten Ausführungsform entspricht mit Ausnahme der in dem Speicher 104 gespeicherten Anweisungen der computergestützten Vorrichtung 100 gemäß der zweiten Ausführungsform. Anstelle der Anweisungen zum Ausführen des Verfahrens gemäß der zweiten Ausführungsform sind in dem Speicher 104 Anweisungen zum Ausführen eines Verfahrens gemäß der vierten Ausführungsform gespeichert. Zusätzlich ermöglich die computergestützte Vorrichtung gemäß der vierten Ausführungsform ein kontinuierliches Aufnehmen von Tiefenbildern.

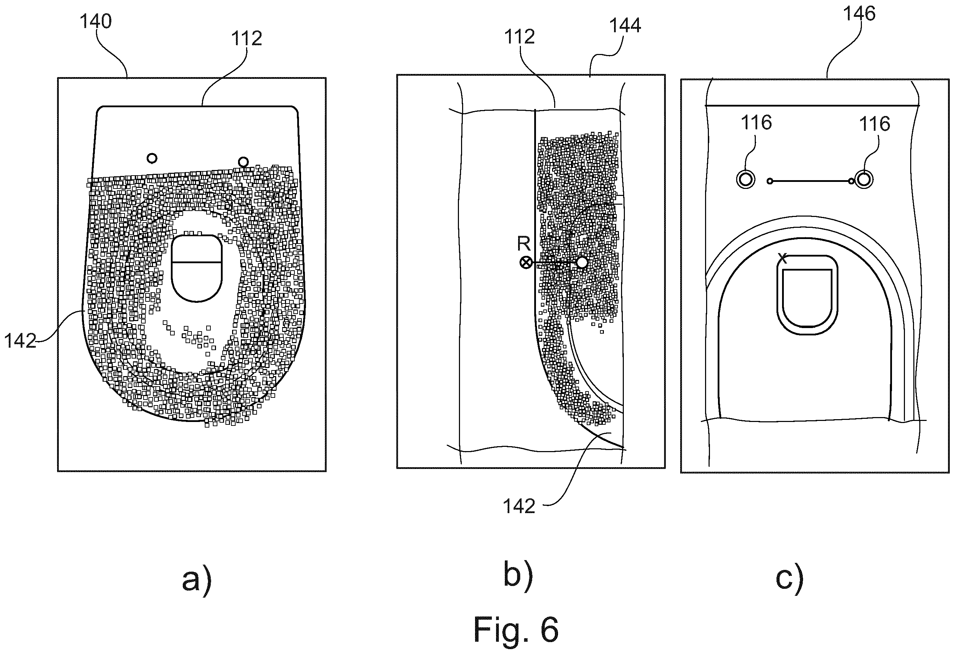

Das Verfahren gemäß der vierten Ausführungsform unterscheidet sich von den Verfahren gemäß der zweiten und dritten Ausführungsform dadurch, dass eine Mehrzahl von Tiefenbildern 140, 144, 146 (siehe Figuren 6a) bis 6c)) kontinuierlich durch die Tiefenbildaufnahmevorrichtung 108 aufgenommen wird und die Erfassung der Keramikgeometrie anhand dieser Mehrzahl von Tiefenbildern 140, 144, 146 erfolgt. Die Aufnahme der Mehrzahl von Tiefenbildern 140, 144, 146 wird dabei aus unterschiedlichen Winkeln und Abständen zu der Keramik durchgeführt und entspricht somit einem Abtasten oder Scannen der Keramik 112. Wie in den Figuren 6a) bis 6c) gezeigt, wird erneut ein Bild einer Auflagefläche der Keramik 112 in einem ersten Tiefenbild 140 aufgenommen. Bevorzugt wird, wie in Fig. 6 a) gezeigt, von einer gesamten Ansicht der Auflagefläche gestartet und die Details der Keramik, wie in den Figuren 6 b) und 6 c) gezeigt, werden anschließend abgeastet, um eine Randbreite R und einen Abstand X zwischen Befestigungslöchern genau zu bestimmen.

Um aus der Mehrzahl von Tiefenbildern 140, 144, 146 die Keramikgeometrie zu bestimmen, werden in der vierten Ausführungsform Auflageflächenpunkte 142, die auf der Auflagefläche der Keramik 112 angeordnet sind, verwendet. Die Auflageflächenpunkte 142 entsprechen somit im Wesentlichen der Auflagenfläche, so dass die Keramikgeometrie anhand der Auflageflächenpunkte angemessen erfasst werden kann.

Insbesondere werden die Auflagenflächenpunkte ausgehend von einem Mittelpunkt von einer in der Mehrzahl von Tiefenbildern vorhandenen dreidimensionalen Punktewolke bestimmt. Die Punktewolke wird durch die in der Mehrzahl von Tiefenbildern enthaltenen Tiefeninformation der einzelnen Pixel erhalten. Ein Bezugssystem, wie etwa ein dreidimensionales Koordinatensystem, in dem abgescannten bzw. abgetasteten Raum kann anhand eines Startpunkts der Aufnahme der Mehrzahl von Tiefenbildern festgelegt werden.

Zusätzlich werden die Auflageflächenpunkte unter Verwendung einer Ebene, die durch die nachfolgende Formel definiert ist, bestimmt. Durch die Verwendung der Formel wird sichergestellt, dass während des kontinuierlichen Aufnehmens eine Abhängigkeit zwischen den Ebenen, in denen die Auflageflächenpunkte vorhanden sind, in der Mehrzahl von Tiefenbildern beibehalten wird, während eine Laufzeit lediglich linear mit zunehmenden Aufnahmen ansteigt.

$$P_{(\mathbb{C}_n)} = \lambda \begin{pmatrix} \cos(\alpha_{(\overrightarrow{v},\mathbb{C}_n)}) \\ 0 \\ \sin(\alpha_{(\overrightarrow{v},\mathbb{C}_n)}) \end{pmatrix} + \mu \begin{pmatrix} 0 \\ \cos(\beta_{(\overrightarrow{v},\mathbb{C}_n)}) \\ \sin(\beta_{(\overrightarrow{v},\mathbb{C}_n)}) \end{pmatrix} + m_{(\mathbb{C}_n)} : \lambda, \mu \in \mathbb{R}_0$$

Eine genaue Bestimmung der Ebene in der die Auflageflächenpunkte vorhanden sind, wird nachfolgend beschrieben:

Definition der Punktewolke:

Zunächst wird eine Heatmap, die Punkte mit dreidimensionalen Koordinaten für das gesamte Tiefenbild darstellt, erhalten. Diese Punkte werden auf der Auflagefläche akkumuliert und weiterverarbeitet, um drei Ebenen zu erstellen, die verwendet werden können, um die Keramikgeometrie bei gleichzeitiger Unabhängigkeit von Ausrichtung und Beziehung zu einem initialen Bezugssystem zu berechnen. Um die Aggregation durchführen zu können, ist eine Definition einer Beziehung zwischen dem Punkt n und dem Punkt n+1 erforderlich, so dass Punkte zu einem vorhandenen Datensatz ohne den Bedarf einer erneuten Iteration hinzugefügt werden können. Die nachfolgenden Formeln geben die Punkte p der Punktewolke $\mathbb{C}_n$ an:

$$n \in \mathbb{Z}^*$$

$$\mathbb{C}_1 = \{p_1\}$$

$$\mathbb{C}_n = \{p_1, \ldots, p_n\}$$

$$\mathbb{C}_n = \{p_1, \ldots, p_n\}$$

$$\mathbb{C}_{n+1} = \mathbb{C}_n \cup \{p_{n+1}\} = \{p_1, \ldots, p_n, p_{n+1}\}$$

$$\mathbb{C}_n = \{p_1, \ldots, p_n\}$$

$$p_n = \begin{pmatrix} x_n \\ y_n \\ z_n \end{pmatrix}$$

Definition des Mittelpunkts:

Der Mittelpunkt m der Punktewolke $\mathbb{C}_n$ ist für die spätere lineare Regression (Deming-Regression) wichtig, da diese den Mittelpunkt eines Datensatzes als einen Anker nutzt. Der Mittelpunkt kann anhand folgender Formel berechnet werden:

$$n \in \mathbb{Z}^*$$

$$m_{(\mathbb{C}_1)} = p_1$$

$$m_{(\mathbb{C}_n)} = \frac{\sum_{i=1}^{n}(p_i)}{n} = \begin{pmatrix} X_n \\ Y_n \\ Z_n \end{pmatrix} = \begin{pmatrix} \dfrac{\sum_{i=1}^{n}(x_i)}{n} \\ \dfrac{\sum_{i=1}^{n}(y_i)}{n} \\ \dfrac{\sum_{i=1}^{n}(z_i)}{n} \end{pmatrix}$$

$$m_{(\mathbb{C}_{n+1})} = \frac{n * m_{(\mathbb{C}_n)} + p_{n+1}}{n+1}$$

Definition der Ebene $P_n$:

Beim Bilden der Ebene soll eine Abhängigkeit zwischen der Ebene $P_n$ und der Ebene $P_{n+1}$ ohne den Bedarf einer Summe erreicht werden, um Punkte bei konstanter Laufzeit hinzufügen zu können, so dass die gesamte Laufzeit mit der Zahl n linear bleibt. Bei der Bestimmung der Ebene gelten die folgenden Definitionen:

$$n \in \mathbb{Z}^*, \vec{v} \parallel \{\vec{x}, \vec{z}\}, \vec{w} \parallel \{\vec{y}, \vec{z}\}, \vec{x} = \begin{pmatrix} 1 \\ 0 \\ 0 \end{pmatrix}, \vec{y} = \begin{pmatrix} 0 \\ 1 \\ 0 \end{pmatrix}, \vec{z} = \begin{pmatrix} 0 \\ 0 \\ 1 \end{pmatrix}, \alpha, \beta \in \mathbb{R},$$

Zum Definieren der Ebene, die die Auflageflächenpunkte am besten annähert, werden zwei Vektoren v und w erstellt, die die Ausrichtung der Ebene anhand von zwei Winkeln $\alpha$ und $\beta$ beschreiben: Die Vektoren v und w werden durch folgende Formeln ausgedrückt:

$$\beta. \; \vec{v}_{(\alpha)} = \begin{pmatrix} cos(\alpha) \\ 0 \\ sin(\alpha) \end{pmatrix}, \vec{w}_{(\beta)} = \begin{pmatrix} 0 \\ cos(\beta) \\ sin(\beta) \end{pmatrix} \Rightarrow |\vec{v}| = 1, |\vec{w}| = 1$$

Die beiden Vektoren v und w sollen derart gewählt werden, dass sie die geringste Distanz zu allen Punkten aufweisen. Hierzu wird die quadratische Distanz von einem Punkt genommen und eine Funktion in Bezug auf seinen Winkel gebildet, um das Minimum zu finden. Hierfür wird folgende Formel verwendet:

$$d_{(\vec{v},p,m,\alpha)} = \frac{|p - m \times \vec{v}_{(\alpha)}|}{|\vec{v}_{(\alpha)}|} = |p - m \times \vec{v}_{(\alpha)}|$$

$$= \left| \begin{pmatrix} x \\ y \\ z \end{pmatrix} - \begin{pmatrix} X \\ Y \\ Z \end{pmatrix} \times \begin{pmatrix} cos(\alpha) \\ 0 \\ sin(\alpha) \end{pmatrix} \right|$$

$$= \sqrt[2]{\begin{array}{c} ((y-Y)sin(\alpha) - (z-Z)0)^2 + \\ ((z-Z)cos(\alpha) - (x-X)sin(\alpha))^2 + \\ ((x-X)0 - (y-Y)cos(\alpha))^2 \end{array}}$$

Um die Funktion weiterverarbeiten zu können, wird sie wie folgt vereinfacht:

$$d^2_{(\vec{v},p,m,\alpha)} = ((y-Y)sin(\alpha))^2 + ((z-Z)cos(\alpha)-(x-X)sin(\alpha))^2 + ((y-Y)cos(\alpha))^2$$

$$d^2_{(\vec{w},p,m,\beta)} = ((x-X)sin(\beta))^2 + ((y-Y)sin(\beta)-(z-Z)cos(\beta))^2 + ((x-X)cos(\beta))^2$$

$$d^2_{(\vec{v},p,m,\alpha)} = sin(\alpha)cos(\alpha)\begin{pmatrix} ((x-X)^2 + (y-Y)^2)tan(\alpha)+ \\ ((y-Y)^2 + (z-Z)^2)cot(\alpha)- \\ 2(x-X)(z-Z) \end{pmatrix}$$

$$d^2_{(\vec{w},p,m,\beta)} = sin(\beta)cos(\beta)\begin{pmatrix} ((x-X)^2 + (y-Y)^2)tan(\beta)+ \\ ((x-X)^2 + (z-Z)^2)cot(\beta)- \\ 2(y-Y)(z-Z) \end{pmatrix}$$

Die Faktoren von tan und cot und die Konstante werden ersetzt, um die Handhabung und die Ableitungen zu vereinfachen:

$$\delta_{(\alpha)} = sin(\alpha)cos(\alpha)(a * tan(\alpha) + b * cot(\alpha) + c)$$

$$\delta'_{(\alpha)} = (a-b)sin(2\alpha) + c * cos(2\alpha)$$

$$\delta''_{(\alpha)} = 2(a-b)cos(2\alpha) - 2c * sin(2\alpha)$$

Der kürzeste oder längste Abstand kann an dem Punkt erhalten werden, an dem die erste Ableitung 0 ist:

$$0 = (a-b)sin(2\alpha) + c * cos(2\alpha)$$
$$\Leftrightarrow -(a-b)sin(2\alpha) = c * cos(2\alpha)$$
$$\Leftrightarrow \frac{-(a-b)sin(2\alpha)}{c * cos(2\alpha)} = 1$$
$$\Leftrightarrow \frac{tan^{-1}\left(\frac{b-a}{c}\right)}{2} = \alpha$$
$$\Leftrightarrow \frac{r\pi * tan^{-1}\left(\frac{b-a}{c}\right)}{2} = \alpha : r \in \mathbb{N}^*$$

Nun können die Funktion für alle Punkte akkumuliert werden, um das Minimum und das Maximum für alle Punkte zu erhalten:

$$\delta_{(\mathbb{C}_n)} = \frac{\sum_{i=1}^{n} \left( d^2_{(\vec{v}, p_n, m_{(\mathbb{C}_n)}, \alpha)} \right)}{n}$$

$$\sum_{i=1}^{n} \left( d^2_{(\vec{v}, p_n, m_{(\mathbb{C}_n)}, \alpha)} \right)$$

$$= \sum_{i=1}^{n} \left( sin(\alpha)cos(\alpha) \left( \begin{array}{c} ((x_i - X_n)^2 + (y_i - Y_n)^2)tan(\alpha) + \\ ((y_i - Y_n)^2 + (z_i - Z_n)^2)cot(\alpha) - \\ 2(x_i - X_n)(z_i - Z_n) \end{array} \right) \right)$$

$$= sin(\alpha)cos(\alpha) \sum_{i=1}^{n} \left( \begin{array}{c} ((x_i - X_n)^2 + (y_i - Y_n)^2)tan(\alpha) + \\ ((y_i - Y_n)^2 + (z_i - Z_n)^2)cot(\alpha) - \\ 2(x_i - X_n)(z_i - Z_n) \end{array} \right)$$

$$= sin(\alpha)cos(\alpha) \left( \begin{array}{c} tan(\alpha) \left( \sum_{i=1}^{n} ((x_i - X_n)^2) + \sum_{i=1}^{n} ((y_i - Y_n)^2) \right) + \\ cot(\alpha) \left( \sum_{i=1}^{n} ((y_n - Y_n)^2) + \sum_{i=1}^{n} ((z_i - Z_n)^2) \right) - \\ 2 \sum_{i=1}^{n} ((x_i - X_n)(z_i - Z_n)) \end{array} \right)$$

Auf diese Weise werden zwei Summen erhalten, die nur von der Punktewolke und nicht vom Mittelpunkt abhängen sollen. Zu diesem Zweck wird der Mittelpunkt als eine Konstante extrahiert, da vorhergehend berechnet wurde:

$$f_{(n)} = \sum_{i=1}^{n} \left( (x_i - X_n)^2 \right)$$
$$= \sum_{i=1}^{n} \left( x_i^2 - 2x_i X_n + X_n^2 \right)$$
$$= \sum_{i=1}^{n} \left( x_i^2 \right) - 2X_n \sum_{i=1}^{n} (x_i) + nX_n^2$$

$$f_{(n+1)} = \sum_{i=1}^{n} \left( x_i^2 \right) + x_{n+1}^2 - 2X_{n+1} \left( \sum_{i=1}^{n} (x_i) + x_{n+1} \right) + (n+1)X_{n+1}^2$$

$$g_{(n)} = -2 \sum_{i=1}^{n} \left( (x_i - X_n)(y_i - Y_n) \right)$$
$$= -2 \sum_{i=1}^{n} \left( x_i y_i - x_i Y_n - y_i X_n + X_n Y_n \right)$$
$$= -2 \left( \sum_{i=1}^{n} (x_i y_i) - Y_n \sum_{i=1}^{n} (x_i) - X_n \sum_{i=1}^{n} (y_i) + nX_n Y_n \right)$$

$$g_{(n+1)} = -2 \left( \begin{array}{c} \sum_{i=1}^{n} (x_i y_i) + x_{n+1} y_{n+1} - \\ Y_n \left( \sum_{i=1}^{n} (x_i) + x_{n+1} \right) - \\ X_n \left( \sum_{i=1}^{n} (y_i) + y_{n+1} \right) + \\ nX_n Y_n \end{array} \right)$$

Aufgrund der Abhängigkeit des Minimums und des Maximums von a, b und c, können diese jeweils um denselben Faktor verändert werden. Dies wird zum Vermeiden eines ständigen Wachstums des Feldes gemacht, indem der Faktor auf die gesamte Punktanzahl n in der Punktewolke festgelegt wird. Das bedeutet, es werden die Durchschnittswerte von a, b und c genommen, um eine neue Funktion zu erstellen. Jedoch kann die Summe dieser Felder nicht beibehalten und der neue Wert hinzuaddiert werden, da die Felder alle gleichermaßen vom Mittelwert abhängen, der wiederum von einer Summe abhängt:

$$f_{(n)}/n = \frac{\sum_{i=1}^{n}\left((x_i - X_n)^2\right)}{n}$$

$$= \frac{\sum_{i=1}^{n}\left(x_i^2\right)}{n} - \frac{2X_n\sum_{i=1}^{n}(x_i)}{n} + X_n^2$$

$$f_{(n+1)}/n + 1 = \frac{\sum_{i=1}^{n}\left(x_i^2\right) + x_{n+1}^2}{n+1} - \frac{2X_{n+1}\left(\sum_{i=1}^{n}(x_i) + x_{n+1}\right)}{n+1} + X_{n+1}^2$$

$$f_{(n+1)}/n + 1 = \frac{\sum_{i=1}^{n}\left(x_i^2\right) + x_{n+1}^2}{n+1} - X_{n+1}^2$$

$$g_{(n+1)}/n + 1 = -2\left(\frac{\sum_{i=1}^{n}(x_i y_i) + x_{n+1}y_{n+1}}{n+1} - X_{n+1}Y_{n+1}\right)$$

Da a, b und c nun definiert sind, können $\alpha$ und $\beta$ berechnet werden. Später werden diese Winkel immer für r = 1 und r = 2 berechnet:

$$\delta_{(\alpha,\vec{v},\mathbb{C}_n)} = sin(\alpha)cos(\alpha)\left(a_{(\vec{v},\mathbb{C}_n)} * tan(\alpha) + b_{(\vec{v},\mathbb{C}_n)} * cot(\alpha) + c_{(\vec{v},\mathbb{C}_n)}\right)$$

$$a_{(\vec{v},\mathbb{C}_n)} = \frac{\sum_{i=1}^{n}\left(x_i^2\right)}{n} + \frac{\sum_{i=1}^{n}\left(y_i^2\right)}{n} - X_n^2 - Y_n^2$$

$$b_{(\vec{v},\mathbb{C}_n)} = \frac{\sum_{i=1}^{n}\left(y_i^2\right)}{n} + \frac{\sum_{i=1}^{n}\left(z_i^2\right)}{n} - Y_n^2 - Z_n^2$$

$$c_{(\vec{v},\mathbb{C}_n)} = -2\left(\frac{\sum_{i=1}^{n}(x_i z_i)}{n} - X_n Z_n\right)$$

$$\alpha_{(\vec{v},\mathbb{C}_n)} = \frac{r\pi}{2} * tan^{-1}\left(\frac{b_{(\vec{v},\mathbb{C}_n)} - a_{(\vec{v},\mathbb{C}_n)}}{c_{(\vec{v},\mathbb{C}_n)}}\right) : r \in \mathbb{N}^*$$

$$\delta''_{(\alpha,\vec{v},\mathbb{C}_n)} > 0$$

$$\delta_{(\alpha,\vec{w},\mathbb{C}_n)} = sin(\beta)cos(\beta)(a_{(\vec{w},\mathbb{C}_n)} * tan(\beta) + b_{(\vec{w},\mathbb{C}_n)} * cot(\beta) + c_{(\vec{w},\mathbb{C}_n)})$$

$$a_{(\vec{w},\mathbb{C}_n)} = \frac{\sum_{i=1}^{n}\left(x_i^2\right)}{n} + \frac{\sum_{i=1}^{n}\left(y_i^2\right)}{n} - X_n^2 - Y_n^2$$

$$b_{(\vec{w},\mathbb{C}_n)} = \frac{\sum_{i=1}^{n}\left(x_i^2\right)}{n} + \frac{\sum_{i=1}^{n}\left(z_i^2\right)}{n} - X_n^2 - Z_n^2$$

$$c_{(\vec{w},\mathbb{C}_n)} = -2\left(\frac{\sum_{i=1}^{n}\left(y_i z_i\right)}{n} - Y_n Z_n\right)$$

$$\beta_{(\vec{w},\mathbb{C}_n)} = \frac{r\pi}{2} * tan^{-1}\left(\frac{b_{(\vec{w},\mathbb{C}_n)} - a_{(\vec{w},\mathbb{C}_n)}}{c_{(\vec{w},\mathbb{C}_n)}}\right) : r \in \mathbb{N}^*$$

$$\delta''_{(\beta,\vec{w},\mathbb{C}_n)} > 0$$

Da nun α und β definiert sind, können die Vektoren v und w berechnet werden. Mit diesen zwei Vektoren v und w und dem Mittepunkt m sind alle Komponenten vorhanden, um eine Ebene zu beschreiben, die die Auflagenflächenpunkte am genauesten annähert. Durch diese Ebene P und ihren Normalenvektor sind alle Komponenten vorhanden, um die Orientierung der Ebene im dreidimensionalen Raum zu beschreiben. Neu abgetastet bzw. gescannte Punkte aus neuaufgenommenen Tiefenbildern können nun zu der Punktewolke hinzugefügt werden und die Ebene ändert die Ausrichtung mit linearer Laufzeit. Die Ebene kann durch die folgende Formel ausgedrückt werden:

$$P_{(\mathbb{C}_n)} = \lambda \begin{pmatrix} cos(\alpha_{(\vec{v},\mathbb{C}_n)}) \\ 0 \\ sin(\alpha_{(\vec{v},\mathbb{C}_n)}) \end{pmatrix} + \mu \begin{pmatrix} 0 \\ cos(\beta_{(\vec{v},\mathbb{C}_n)}) \\ sin(\beta_{(\vec{v},\mathbb{C}_n)}) \end{pmatrix} + m_{(\mathbb{C}_n)} : \lambda, \mu \in \mathbb{R}_0$$

Verwendung von P zum Erfassen der Keramikgeometrie:

Da die Ebene P nun zur Verfügung steht, können die Befestigungslöcher 116 auf die Auflagenfläche projiziert und ein weiterer Vektor zwischen diesen projizierten Befestigungslöchern definiert werden. Zusammen mit dem Normalenvektor ergibt dies einen dritten orthogonalen Vektor. Mit diesem dritten orthogonalen Vektor können zwei weitere Ebenen beschreiben werden, die es ermöglichen, die maximalen Abstände der Punktwolke in allen drei Dimensionen aus der Perspektive der Auflagefläche unabhängig von ihrer Drehung in der realen Welt oder von Translationsfehlern der Tiefenbildaufnahmevorrichtung zu erhalten.

Demzufolge ermöglicht die vierte Ausführungsform ein Abtasten einer Auflagenfläche der Keramik, wodurch Parameter der Keramikgeometrie aufgrund einer besseren Auflösung genauer bestimmbar sind.

Weitere Ausführungsformen

Obenstehend wurden vier Ausführungsformen der vorliegenden Erfindung separat beschrieben. Es ist aber zu erwähnen, dass die Ausführungsformen auch miteinander kombiniert und durch eine einzige computergestützte Vorrichtung ausgeführt werden können. Der Nutzer der tragbaren Vorrichtung kann dann auswählen, welche der vier Ausführungsformen er verwenden möchte.

Außerdem ist denkbar, dass die erste Ausführungsform durch eine tragbare Vorrichtung mit Tiefenbildaufnahmevorrichtung ausgeführt wird. In diesem Fall kann dann eine ermittelte Austausch-WC-Sitzgarnitur auf einem Tiefenbild überlagert werden, obwohl das Tiefenbild bei der Ermittlung der Austausch-WC-Sitzgarnitur nicht verwendet wurde.

**Patentansprüche**

1. Verfahren zum Ermitteln einer auf eine Keramik passenden und aus einem WC-Sitz sowie einem WC-Deckel gebildeten Austausch-WC-Sitzgarnitur mit den Schritten:

   Aufnehmen eines Tiefenbilds von der Keramik, auf die die Austausch-WC-Sitzgarnitur passend anzubringen ist,
   Erfassen einer Keramikgeometrie aus dem Tiefenbild,
   Vergleichen der erfassten Keramikgeometrie mit, insbesondere in einer Datenbank, gespeicherten Keramikgeometrien von unterschiedlichen Austausch-WC-Sitzgarnituren,
   Ausgeben eines Typs der Austauch-WC-Sitzgarnitur, die der Keramikgeometrie entspricht und die Passgenauigkeit auf der Keramik erreicht.

2. Verfahren gemäß Anspruch 1, wobei das Tiefenbild eine Auflagefläche der Keramik zeigt.

3. Verfahren gemäß einem der Ansprüche 1 oder 2, wobei die Keramikgeometrie eine Breite der Keramik, eine Länge von einem hinteren Rand des Beckens zu einem vorderen Rand der Keramik und einen Abstand zwischen Mittelpunkten von Befestigungsstellen und bevorzugt zusätzlich eine Breite des Beckens und eine Länge des Beckens in der Keramik umfasst.

4. Verfahren gemäß einem der Ansprüche 1 bis 3, wobei das Erfassen der Keramikgeometrie ein Erkennen von Kanten der Auflagefläche in dem Tiefenbild umfasst.

5. Verfahren gemäß Anspruch 4, wobei das Erfassen der Keramikgeometrie das Festlegen von Messpunktpaaren, zwischen denen ein Abstand zu bestimmen ist, an vorgegebenen Stellen an den erkannten Kanten umfasst.

6. Verfahren gemäß einem der Ansprüche 1 bis 3, wobei das Aufnehmen des Tiefenbilds ein kontinuierliches Aufnehmen von einer Mehrzahl von Tiefenbildern aus unterschiedlichen Winkeln und Abständen zu der Keramik umfasst und das Erfassen der Keramikgeometrie anhand der Mehrzahl von Tiefenbildern erfolgt.

7. Verfahren gemäß der Ansprüche 2 und 6, wobei das Erfassen der Keramikgeometrie ein Bestimmen von auf der Auflagefläche angeordneten Auflageflächenpunkten in der Mehrzahl von Tiefenbildern umfasst und die Keramikgeometrie anhand der Auflageflächenpunkte erfasst wird.

8. Verfahren gemäß Anspruch 7, wobei die Auflageflächenpunkte ausgehend von einem Mittelpunkt von einer in der Mehrzahl von Tiefenbildern vorhandenen dreidimensionalen Punktewolke bestimmt werden.

9. Verfahren gemäß Anspruch 8, wobei die Auflageflächenpunkte unter Verwendung einer Ebene, die durch die nachfolgende Formel definiert ist, bestimmt werden:

$$P_{(\mathbb{C}_n)} = \lambda \begin{pmatrix} \cos(\alpha_{(\overrightarrow{v},\mathbb{C}_n)}) \\ 0 \\ \sin(\alpha_{(\overrightarrow{v},\mathbb{C}_n)}) \end{pmatrix} + \mu \begin{pmatrix} 0 \\ \cos(\beta_{(\overrightarrow{v},\mathbb{C}_n)}) \\ \sin(\beta_{(\overrightarrow{v},\mathbb{C}_n)}) \end{pmatrix} + m_{(\mathbb{C}_n)} : \lambda, \mu \in \mathbb{R}_0$$

10. Verfahren gemäß einem der Ansprüche 7 bis 9, wobei das Erfassen der Keramikgeometrie das Festlegen von Messpunktpaaren, zwischen denen ein Abstand zu bestimmen ist, an vorgegebenen Stellen der bestimmten Auflageflächenpunkte umfasst.

11. Verfahren gemäß einem der Ansprüche 1 bis 3, wobei die Messpunktpaare durch Eingabe über eine Benutzerschnittstelle, insbesondere über einen berührungsempfindlichen Bildschirm, festgelegt werden.

**12.** Verfahren gemäß einem der Ansprüche 1 bis 11, wobei das Ausgeben der WC-Sitzgarnitur ein Ausgeben von mehreren Typen von Austausch-WC-Sitzgarnituren und einer dazugehörigen Wahrscheinlichkeit der Entsprechung mit der Keramik umfasst.

**13.** Verfahren gemäß einem der Ansprüche 1 bis 12, das, nach dem Ausgeben eines Typs der Austauch-WC-Sitzgarnitur, einen Schritt zum Überlagern eines dreidimensionalen Modells der ermittelten Austausch-WC-Sitzgarnitur in dem Tiefenbild aufweist.

**14.** Computerlesbares Speichermedium, in dem Anweisungen, die eine computergestützte Vorrichtung veranlassen, das Verfahren gemäß einem der Ansprüche 1 bis 13 auszuführen, gespeichert sind.

**15.** Computergestützte Vorrichtung, die das computerlesbare Speichermedium gemäß Anspruch 14 und mindestens einen Prozessor zum Ausführen der in dem computerlesbaren Speichermedium gespeicherten Anweisungen aufweist und ferner eine Tiefenbildaufnahmevorrichtung aufweist oder mit dieser verbindbar ist.

EP 4 428 837 A1

Fig. 1

Fig. 2

16

Fig. 3

Fig. 4

a)

b)

b)

Fig. 5

EP 4 428 837 A1

Fig. 6

Europäisches
Patentamt

European
Patent Office

Office européen
des brevets

# EUROPÄISCHER RECHERCHENBERICHT

**Nummer der Anmeldung**

EP 24 16 1471

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 451 269 A1 (GEBERIT INT AG [CH]) 6. März 2019 (2019-03-06) * Zusammenfassung * * Absatz [0006] - Absatz [0059] * * Abbildungen 5-6 * ----- | 1-15 | INV. G06V20/64 A47K13/24 G01B11/24 |
| A | US 2014/083594 A1 (PENG SHAO-YU [TW]) 27. März 2014 (2014-03-27) * Zusammenfassung * * Absatz [0006] - Absatz [0033] * ----- | 1-15 | |

**RECHERCHIERTE SACHGEBIETE (IPC)**

G06V
G01B
A47K

Der vorliegende Recherchenbericht wurde für alle Patentansprüche erstellt

| Recherchenort | Abschlußdatum der Recherche | Prüfer |
|---|---|---|
| Den Haag | 9. Juli 2024 | Karwe, Markus |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 16 1471

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2024

| Im Recherchenbericht angeführtes Patentdokument | Datum der Veröffentlichung | Mitglied(er) der Patentfamilie | | Datum der Veröffentlichung |
|---|---|---|---|---|
| EP 3451269 A1 | 06-03-2019 | KEINE | | |
| US 2014083594 A1 | 27-03-2014 | CN | 103654596 A | 26-03-2014 |
| | | TW | 201413091 A | 01-04-2014 |
| | | US | 2014083594 A1 | 27-03-2014 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2175413 A1